# EUROPEAN PATENT SPECIFICATION

(11) **EP 4 565 078 B1**
(45) Date of publication and mention of the grant of the patent: **15.07.2026**
(21) Application number: 23754864.9
(22) Date of filing: 31.07.2023
(51) Int. Cl.: A23L 33/19, A23G 3/44, A23L 29/281, A23L 33/18

(54) **A NUTRITION BAR, A CORE FOR A NUTRITION BAR, AND A METHOD OF FORMING THE NUTRITION BARS**
NAHRUNGSRIEGEL, KERN FÜR NAHRUNGSRIEGEL UND VERFAHREN ZUR HERSTELLUNG DER NAHRUNGSRIEGEL
BARRE DE NUTRITION, PARTIE CENTRALE POUR CETTE BARRE DE NUTRITION ET PROCEDE DE FABRICATION DE CETTE BARRE DE NUTRITION

(30) Priority: 04.08.2022 GB 202211369; 10.08.2022 GB 202211692
(43) Date of publication of application: 11.06.2025
(73) Proprietor: Intercontinental Great Brands LLC, East Hanover, NJ 07936 (US)
(72) Inventor: CULSHAW, Ann Louise, 2200 Herentals (BE); GERARD-BELOUIN, Catherine, 91400 Saclay (FR); BINGLEY, Carole Ann, Reading Berkshire RG6 6LA (GB)
(74) Representative: Boult Wade Tennant LLP
(86) International application number: PCT/IB2023/057762
(87) International publication number: WO 2024/028752

(56) References cited:
- EP-A1- 1 302 111
- EP-A1- 2 545 789
- WO-A1-2018/041684
- WO-A1-2020/007650
- WO-A1-2020/038685
- CN-A- 114 304 649
- US-A1- 2006 182 872

## Description

The present invention relates to a base-cake for a nutrition bar, and a nutrition bar (that comprises a base-cake), particularly a sports nutrition bar, having a desirable texture over a long shelf-life. In particular, the nutrition bar provides a high amount of protein and a low sugar content, with maintaining the desirable texture which is neither dry nor brittle. The presence of texture additives, such as biscuit pieces, provides a multi-dimensional texture profile and the structure of the nutrition bar prevents degradation of the texture additives during the shelf-life.

Nutrition bars, otherwise known as energy bars, or protein bars, are well-known, and there are many different nutrition bars available on the market. Some are intended to be consumed quickly and on-the-go to provide energy release during exercise, while others are targeted at consumers who are trying to lose weight, and therefore looking for something that can provide energy, but which does not contain high levels of sugars. In addition, some are targeted at consumers who wish to have a high protein snack that aids with muscle gain.

Existing nutrition bars include those under the Brand names of Rema 1000^{™}, Harvest Morn ^{™}, Tine YT ^{™}, MuscleNation Custard ^{™}, Nutrend Premium Protein 50% ^{™}, Layenberger Newtritionstyle ^{™}, MaxSport Collagen+ ^{™}, Best Body Nutrition Premium Series Crunchy One ^{™}, Muscle Food ^{™}, Myprotein ^{™}, Nutramino Nutra-Go Plant ^{™}, Grenade Carb Killa^{™}, Quest ^{™}, Fulfil ^{™}, and various others. Further existing nutrition bars include the Cookies & Cream Flavour Protein Bar by The Hut Group, Atkins Advantage Caramel Fudge Brownie by Atkins Nutritionals, and Crumblin' Cookies and Cream by Bulk Powders.

Nutrition bars generally contain a high proportion of protein to carbohydrates/fats. However, nutrition bars that are designed for energy release during exercise (i.e. energy bars) generally have a higher carbohydrate content than protein bars that are aimed more at those wishing to build muscle and/or lose weight. Protein bars are targeted at people who primarily want a convenient source of protein that is quick and easy to transport and consume.

Nutrition bars are generally considered as a snack and are designed to be ready-to-eat, with minimal to zero preparation of the product, or equipment required to consume the product.

In the field of sports fitness, it is known that consuming protein after exercise helps to build the muscles used. Whey protein is one of the most popular protein sources used for athletic performance. Another protein source includes egg albumen protein. Alternatively, protein bars may use insect protein as an ingredient, or plant-based proteins from sources like peas, brown rice, hemp, and soybeans.

Protein bars can often be quite dry, and consumers often find the products to be of a bland flavour, and generally lacking sweet taste and softer texture. In particular, after exercise (when the consumer's mouth is already quite dry), nutrition bars can be unpleasant to consume. Including more water in nutrition bars (to reduce the dryness) generally just causes some of the ingredients to become soggy and reduces the shelf-life of the product.

Attempts have been made to provide a nutrition bar that has a pleasant taste and texture, and which has a high level of protein.

EP 1755407 B1 discloses a food bar having increased shelf life, wherein carbohydrate makes up to 50 to 60% of the total weight of the food bar, the bar comprising (a) a protein-containing ingredient comprising greater than 25% of the weight of the ingredients; (b) a carbohydrate-containing ingredient; and (c) a softener selected from the group consisting of: highly-branched indigestible dextrin, inulin, highly-branched maltodextrin, fructooligosaccharides, polydextrose, and mixtures thereof comprising at least 0.1% of the ingredients. The softener is added to maintain the texture of the bar through its shelf life, and to increase the initial softness of the bar after formulation.

US 6432457 B1 discloses a bar comprising (a) proteinaceous material having a water absorption property of less than 2.5 grams of water per gram of protein at pH 5.5 and medium to high emulsifying capacity, and (b) carbohydrate material selected from the group consisting of digestible carbohydrate, indigestible carbohydrate and a mixture thereof; wherein said bar is produced by cold extrusion; wherein said proteinaceous material and said carbohydrate material are both present in said bar in a protein: carbohydrate relative weight ratio higher than 1, and wherein said proteinaceous material is a filler protein and a binding protein. In this document, it is disclosed that the use of such proteinaceous material having a dissociation between water absorption properties and other functional characteristics render them suitable for high protein bars without adverse effect on the palatability of the bar.

US 7556836 B2 discloses a high protein snack product comprising a cohesive product mixture within a polyvinyldenechloride casing material, wherein the cohesive product mixture comprises from about 2.5 wt.% up to about 3.5 wt.% of a binding agent, from about 2 wt.% up to about 3 wt.% of a salt, up to about 35 wt.% of a sweetener, from about 35 wt.% up to about 60 wt.% of a textured soy protein product, wherein the textured soy protein soy protein product is hydrated and shredded to form fibers and from about 2 wt.% up to about 4 wt.% of a fruity flavoring agent, wherein the textured soy protein product comprises wheat gluten and a blend of soy protein isolates, wherein the blend of soy protein isolates comprises at least 2 parts by weight of a hydrolyzed soy protein isolate per part by weight of an unhydrolyzed soy protein isolate, and wherein the textured soy protein product comprises at least 75 wt.% protein, wherein the protein in the textured soy protein product is at least 66 wt.% soy protein.

KR 102140774 B1 discloses a high protein snack bar having 100 parts by weight of a first component comprising a puffed soy protein isolate and puffed grains; 120 parts by weigh to 170 parts by weight of a second component containing syrup solution, the syrup solution comprising crude syrup, sugar, stevia and salt; at least one of nuts, dried fruits and cereals, 180 to 25 parts by weight of a third component comprising non-puffed soy protein, vitamins and minerals, and the high protein snack bar having a protein content of from 30 to 45 wt.%.

EP 2 545 789 A1 discloses high-protein foods comprising animal proteins such as egg white and meat protein, plant protein isolate, whey protein, whey protein hydrolysate, two different animal protein hydrolysates, optional casein and/or caseinate, a humectant and oil of plant or animal origin, which has a water activity of at most 0.6. These products may be formed by rolling, cutting, and coating with a chocolate base.

While the use of proteins, including milk-derived proteins, in nutrition bars is generally known, existing protein bars lack desirable organoleptic properties, including texture and moistness, whilst still being high in protein and having a long shelf-life.

Accordingly, it is desirable to provide a nutrition bar that has a high protein content, whilst also having good organoleptic properties, including moistness (i.e. a comparatively high water content) and desirable texture, and a long shelf-life.

According to a first aspect of the invention, there is provided a nutrition bar having at least 30wt% protein and less than 3.3wt% sugar, the nutrition bar comprising a coating layer at least substantially enclosing:
(a) a base-cake having a water activity (aW) of 0.5 to 0.65 and comprising at least 50wt% protein, the protein comprising:
   calcium caseinate;
   whey protein; and
   hydrolysed beef collagen;
(b) a fat-based crème layer on the base-cake; and
(c) one or more texture additives on, or embedded in, the fat-based crème layer,
wherein the fat-based crème layer separates the one or more texture additives from the base-cake.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The first aspect provides a nutrition bar. By nutrition bar, it is meant a food-product, either in a cuboid shape, or a cylinder, or any other appropriate shape, which is ready to eat, once any relevant packaging has been removed, and which provides a high (e.g. greater than 30 wt.%) amount of protein. The nutrition bar can be a protein bar or an energy bar. A typical serving size for a nutrition bar is from 50 to 75g and preferably is about 60g.

The nutrition bar has at least 30 wt.% protein content and has less than 3.3 wt.% sugar. Preferably the nutrition bar has 30 wt.% to 50wt% protein content, more preferably 33 to 40wt% protein content. Preferably the nutrition bar has less than 3.3 wt.% sugar, preferably less than 3wt% sugar and more preferably less than 2wt% sugar. In some embodiments the nutrition bar will contain substantially no sugar.

The amount of protein and sugar is calculated relative to the total weight of the nutrition bar. Both sugar and protein are given their normal meaning within food chemistry. In a 60g protein bar, the protein level will preferably be at least 18g, more preferably at least 20g, such as 20 to 25g. The sugar content will preferably be less than 2g, preferably less than 1.5g. Preferably the nutrition bar has no added sugar. It should be noted that small amounts of sugar may be present as naturally occurring sugars in certain ingredients.

The nutrition bar comprises a coating, and the coating at least substantially encloses components (a) to (c). By coating, it is meant an edible product on the surface of the remaining components of the nutrition bar. The coating at least substantially encloses components (a) to (c). Therefore, the coating must substantially enclose, or enrobe, components (a) to (c), but may completely enclose components (a) to (c), such that the coating forms an outer shell surrounding the remaining components of the nutrition bar. By "substantially" it is meant that the coating is on at least 50 % of the surface area of the nutrition bar, or at least 60 %, or at least 70 %, preferably greater than 80 %, and more preferably greater than 90 % of the surface area of the nutrition bar. It is most preferred that the coating entirely encloses the components (a)-(c).

Suitable materials for the coating are chocolate formulations and compound coating materials. In order to meet the desired low sugar content, low or no-added sugar formulations of these should be used. Such compositions are well known in the art and are commercially available. No-added sugar coating formulations are most preferred. The coating is preferably a chocolate-type coating, but other flavours may be used. The coating is preferably a fat-based or anhydrous coating.

The coating preferably has a thickness when applied of from 1 to 4mm, preferably 2-3mm. It is intended that the coating is substantially constant in thickness and present on all sides of the product. However, it should be appreciated that the texture additives may cause disruption or pooling of the coating. Therefore the thickness measurement is preferably an average of those regions of the coated bar other than those on and immediately around the texture additives.

The coating should form a barrier against moisture loss from the base-cake and, in particular moisture migration to the texture additives (within the packaging and around the crème layer). This is why it is desirable to provide a consistent coating at least around the exposed surfaces of the base-cake. It is also why the coating is generally fat-based to mitigate moisture transfer. The coating also helps to keep the texture additives affixed to the remaining product and prevents any of the pieces of additives from coming away from the crème layer.

The nutrition bar also has a base-cake. By base-cake, it is meant a portion of the nutrition bar that is forms the core of the product. It desirably has a soft texture that is easily penetrated with a bite, as opposed to being dry or crunchy. The base-cake has a water activity (aW) of from 0.5 to 0.65. Water activity of a food product is the ratio between the vapour pressure of the food itself, when in a completely undisturbed balance with the surrounding air media, and the vapour pressure of distilled water under identical conditions. Water activity is a conventional measurement in the art and can be determined, for example, with a Novasina AW SPRINT at 25°C.

A water activity of greater than 0.85 is susceptible to growth of bacteria, yeasts and mould.

Therefore, it is desirable to have a water activity that is sufficiently high that the product has a moist taste and texture, not so high that the product is susceptible to going mouldy, therefore reducing the shelf-life of the product. A water activity of from 0.5 to 0.65 provides this desired balance. Preferably the water activity is from 0.55 to 0.62, more preferably from 0.58 to 0.60. These water activities ensure a good mouthfeel and texture, while permitting a desirable shelf-life. The water functions as a plasticizer, maintaining the flexibility of the bar matrix.

The base-cake comprises at least 50 wt.% protein. Preferably the protein is present in an amount of 55 to 65wt% of the base-cake, more preferably 57 to 63wt%. The protein (that is present in at least 50 wt.%) in the base-cake, comprises calcium caseinate, whey protein (preferably whey protein) and hydrolysed beef collagen. Other sources of protein may also be present.

Calcium caseinate is a protein that is derived from the casein in milk. It has a good flavour and low viscosity, making it an attractive protein source for use in high-protein food products. Whey protein is made from whey concentrate and the most preferred form is whey protein isolate. Whey protein isolate is whey protein that has been filtered in a process to help remove the lactose in the powder itself. Beef collagen, which is hydrolysed beef collagen, is a structural protein derived from cows. It contains types I and III collagen, which are advantageous for muscle recovery. By hydrolysed, it is meant that the beef collagen has been broken down into smaller units of protein (or collagen peptides), through a process known as hydrolysis. The hydrolysed beef collagen makes it so that the collagen can easily dissolve in hot or cold liquids, which makes it convenient for processing and mixing with other ingredients during manufacture. All of these ingredients are well known and commercially available.

Preferably, of the protein in the base-cake, 20 to 40wt% is calcium caseinate, such as 25 to 35 % is calcium caseinate, more preferably 28 to 33wt%, and most preferably about 28wt%.

Preferably, of the protein in the base-cake, from 15 to 35wt% is whey protein (preferably whey protein), such as from 20 to 30 %, more preferably 22 to 27wt% and most preferably about 25wt%. Preferably, of the protein in the base-cake, from 30 to 55wt%, such as from 38 to 45 wt% is hydrolysed beef

collagen, more preferably 40 to 43 wt%, and even more preferably from 41 to 42 wt.%. Of these, the amount of hydrolysed beef collagen is the most flexible and this may be adjusted to lower values in the range to account for the presence of up to 10wt% of other protein sources.

This specific combination of calcium caseinate, whey protein and hydrolysed beef collagen in the recited amounts allows the base-cake to maintain a water activity of 0.5 to 0.65, meaning that the base-cake has a good amount of water and a moist texture, giving rise to desirable organoleptic properties. In addition, the base-cake has a high protein content, making the base-cake advantageous for use in nutrition bars.

The protein content of the bar is directly tied to bar hardening during shelf-life as water migrates from the binders into the proteins and, where present, the cocoa ingredient. This impacts the ability to maintain texture softness. The inventors have found that the key to minimizing this phenomenon is using the right type and blend of protein to hit the final product specifications. The inventors have particularly found that calcium caseinate brings bar crumbliness. Whey protein brings shortness and chewiness. The hydrolysed beef collagen demonstrates a fairly neutral impact on the texture but does impact the aW phase with uptake of water. The proteins used in combination can aid in overall water binding and flavour of the bar.

Apart from the protein, the base-cake will contain further ingredients. Preferably the further ingredients comprise 15 to 25wt% glycerine; and/or 10 to 20wt% fat; and/or up to 10wt% cocoa powder. Ingredients such as cocoa butter provide flavour and colour to the base-cake. Preferably, the base-cake comprises from 5 to 10wt% cocoa powder (~3wt% in the final nutrition bar) since this gives a good flavour and appearance. The glycerine and fat add structure and softness to the bar, while minimising the amount of added water required. Alternatives to glycerine are well know, such as corn syrup, propylene glycol, and the like. The base-cake will typically further include an amount of water, together with flavourings and sweeteners, as desired. The added water may be in the region of 10 to 20wt%, with the specific amount selected to provide good sheetability of the mixture and a desirable moisture level.

Desirably the base-cake is unbaked. The specific ingredients discussed above permit the provision of the base-cake by mixing and compaction. This helps to speed the production process and avoids degradation of the protein ingredients.

The nutrition bar also comprises (b) a fat-based crème layer on the base-cake. A fat-based crème is an anhydrous product with a soft and plastic form. The crème filling preferably has a moisture content of less than 5wt%, preferably less than 1wt% and preferably substantially no moisture content.

An example of a Crème is the creamy white layer often found in between the dark biscuits in a black and white sandwich biscuit. The crème layer can comprise food polyols, such as maltitol, fat, such as palm oil, and flavourings such as vanillin flavour. Further sweetening or structuring agents may be included, such as starch and/or sucralose. The crème layer is applied onto the base-cake during manufacture such that the crème layer is on one face of the base-cake. The crème layer is fat-based, meaning that it has a substantial amount of fat, preferably at least 25 wt.%, more preferably at least 30wt%. In some embodiments the fat level will be from 30 to 50wt% of the crème.

The nutrition bar also comprises (c) one or more texture additives, which are on, or embedded in, the fat-based crème layer. The texture additives are preferably selected from biscuit fragments, fruit chunks, crushed nuts, protein crisps, and chocolate chips. Protein crisps help to further increase the protein content of the product. The one or more texture additives are preferably biscuit pieces, such as chunks and/or crumbs of the dark biscuit found on either side of the inner crème layer in a black and white sandwich biscuit. Preferably, the dark biscuit is sugar-free. Alternatively, the one or more texture additives can comprise chocolate chips, preferably milk or dark sugar-free chocolate chips. The one or more texture additives can be on top of the crème layer, such that they are as spatially distant from the base-cake as possible, or they can be embedded in the crème layer, such that they are at least partially, or entirely, surrounded by the crème layer. Components such as biscuit fragments and protein crisps are particularly prone to losing their crisp texture when exposed to moisture.

Preferably, the texture additives have a particle size of 1 to 5mm, preferably 2 to 4mm. Preferably, the texture additives are substantially free of particles smaller than 1mm. This can be achieved with sieving, for example. The size range is desirable to ensure that the texture additives are discernible when the bar is consumed, but not so large as to disrupt the coating or to provide manufacturing difficulties. The absence of dust particles (less than 1mm) also improves the manufacturing process and avoids the presence of a dry dusty layer in the product structure.

The fat-based crème layer separates the one or more texture additives from the base-cake. By "separates", it is meant that the one or more texture additives are held spatially distant from the base-cake, such that the one or more texture additives are not in direct contact with the base-cake. It is necessary that they are isolated from the base-cake as the moisture content of the base-cake could lead to a degradation of the texture of these additives.

The nutrition bar of the first aspect of the present invention advantageously has good organoleptic properties, arising from the moisture-containing base-cake, crème layer and texture additives. The specific combination of proteins in the base-cake allows the base-cake to maintain a high-water activity in the range of 0.5 to 0.65 and a desirable texture. In addition, the fat-based crème layer prevents the water from the base-cake from migrating to the texture additives, making these softer or even soggy. Therefore, the nutrition bar has a long shelf-life, maintaining desirable organoleptic properties over this long shelf-life.

Thus, the inventors have provided a product which meets the nutritional requirements of a sports bar, while providing a multidimensional experience. The texture additives, such as biscuit pieces, remain crispy, despite the proximity to the base-cake, adding an additional element to the experience. The nutrition bar has a soft and desirable base-cake at its core, with crunchy texture additives, without a loss of these desirable properties over its shelf-life.

The nutrition bar is generally packaged after production. Such packaging is generally a flow-wrap. This ensures that the product is hermetically sealed from the environment which helps to prevent moisture loss from the product.

The product typically has a shelf-life of at least 9 months, preferably at least 12 months. This means that the texture is not materially degraded in this time period and the product is still commercially viable.

In the final product it is preferred that relative to the weight of the final product:
the base-cake is present in an amount of 60-70wt%;
the fat-based creme layer is present in an amount of 10 to 20wt%;
the texture additives are present in an amount of 1 to 6wt%, and
the coating layer is present in an amount of from 15 to 25wt%.

More preferably, in the final product it is preferred that relative to the weight of the final product:
the base-cake is present in an amount of 62-65wt%;
the fat-based creme layer is present in an amount of 12 to 18wt%;
the texture additives are present in an amount of 2 to 5wt%, and
the coating layer is present in an amount of from 17 to 23wt%.

Preferably the nutrition bar does not contain any water-based filling composition or layer. Examples of water-based fillings are fruit-fillings and caramel fillings. Such materials would introduce undesirably high levels of moisture into the product.

In a further aspect of the present invention, there is provided a base-cake for a nutrition bar, the base-cake having a water activity (aW) of 0.5 to 0.65, and comprising at least 50wt% of protein, the protein comprising, based on the total weight of protein in the base-cake:
25-35 % calcium caseinate;
20-30 % whey protein (preferably isolate); and
38-45 % hydrolysed beef collagen.

The details of the first aspect of the present invention in relation to the base-cake apply to this further aspect of the present invention. Furthermore, the preferred features of the bake-cake (a) of the first aspect of the invention apply equally to this further aspect of the present invention.

In a further aspect of the present invention, there is provided a method of forming nutrition bars according to the first aspect of the present invention, the method comprising:
preparing a base-cake-premix comprising at least 50wt% protein, the protein comprising calcium caseinate, whey protein and hydrolysed beef collagen;
rolling the base-cake-premix to provide a base-cake-sheet, the base-cake sheet having a water activity (aW) of 0.5 to 0.65;
applying a fat-based creme to form a fat-based crème layer on the base-cake-sheet;
applying one or more texture additives to the fat-based crème layer to form a composite sheet product;
dividing the composite sheet product into a plurality of nutrition bar precursors;
enrobing the nutrition bar precursors with a coating layer to form nutrition bars.

The details of the first aspect of the present invention in relation to the base-cake apply to this further aspect of the present invention. Furthermore, the preferred features of the bake-cake (a) of the first aspect of the invention apply equally to this further aspect of the present invention. In particular, the protein in the base-cake most preferably comprises, based on the total weight of protein in the base-cake:
25-35 % calcium caseinate;
20-30 % whey protein (preferably isolate); and
38-45 % hydrolysed beef collagen.

The method includes a first step of preparing a base-cake premix comprising at least 50 wt.% protein. Preparing the base-cake premix can be done by mixing the required ingredients in an appropriate mixing device. First, the relevant ingredients can be weighed, and then these can be mixed, continuously or in batch, in a device such as a blade mixer. The protein ingredients can be weighed and mixed separately, and then added to the remaining ingredients, or all ingredients can be weighed and mixed together in one step. The protein in the base-cake premix comprises calcium caseinate, whey protein and hydrolysed beef collagen.

The next step requires rolling the base-cake-premix to provide a base-cake sheet, the base-cake sheet having a water activity (aW) of 0.5 to 0.65. This step of rolling the base-cake premix can be done in batch or as a continuous process using standard rolling techniques and apparatus known in the art, such as forming drums. The base-cake sheet is preferably rolled to about 0.5 to 3 cm thickness.

Once the base-cake sheet has been formed, a fat-based crème is applied to an available side of the sheet. The crème can be applied using known techniques and apparatus in the art, such as a bucket sheeter. The crème layer can be applied to an entire face of the base-cake sheet. For ease of manufacturing, the crème layer preferably covers a top surface of the base-cake sheet.

Then, one or more texture additives are applied to the fat-based crème layer to form a composite sheet product. The one or more texture additives can be added in a uniform, or in a random configuration on or in the crème layer. Known techniques and apparatus for sprinkling crumbs onto a food product can be used. The composite sheet, when cut vertically down will preferably have a configuration of a bottom base-cake layer, with a crème layer on top of the base-cake, and then one or more texture additives in or on the crème layer. The one or more texture additives do not contact the base-cake layer.

Then, the composite sheet product is divided into a plurality of nutrition bar precursors. This is done by known cutting methods, such as use of a guillotine. The composite sheet may be cooled by slab cooling before being divided into the plurality of nutrition bar precursors. The use of a sheeter and cutting system gives rise to a much more efficient process, permitting faster and cheaper production. The selection of the base-cake makes it cuttable without cracking, and the structure of the crème and texture additives is also compatible with the process.

Lastly, each nutrition bar precursor is enrobed with a coating layer to form individual nutrition bars. This can be done using known methods, such as by dipping each precursor into the coating composition to partially or entirely enrobe/enclose each nutrition bar precursor. The step of enrobing the nutrition bar precursors preferably includes enrobing at least the base-cake so that the base-cake is not in direct contact with air. The enrobing step may preferably enrobe the entire precursor so that all of the base-cake, crème layer and texture additives are enrobed and the outer surface of the precursor is entirely covered with the coating layer.

The method of the present invention is advantageously able to produce a nutrition bar in accordance with the invention, that does not require individually extruding each nutrition bar. This makes the process more efficient, meaning that more nutrition bars can be produced in a given amount of time, which also makes the process economically advantageous. The inventors have found that a consistent product can be produced in much higher amounts, reducing the manufacturing time and complexity.

The invention will now be described in relation to the following non-limiting figures, in which:

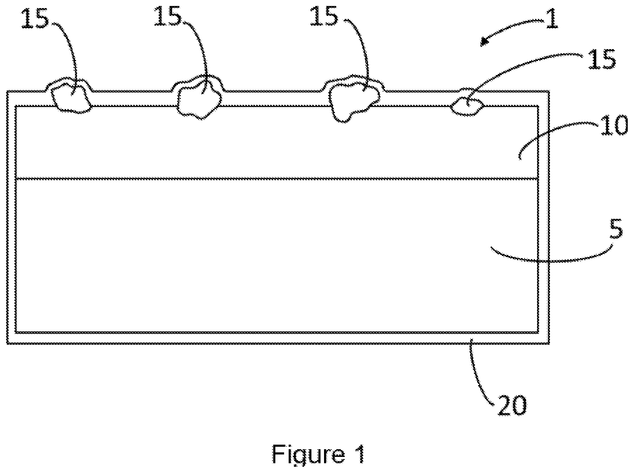

Figure 1 shows a cross-section through a nutrition bar described herein.

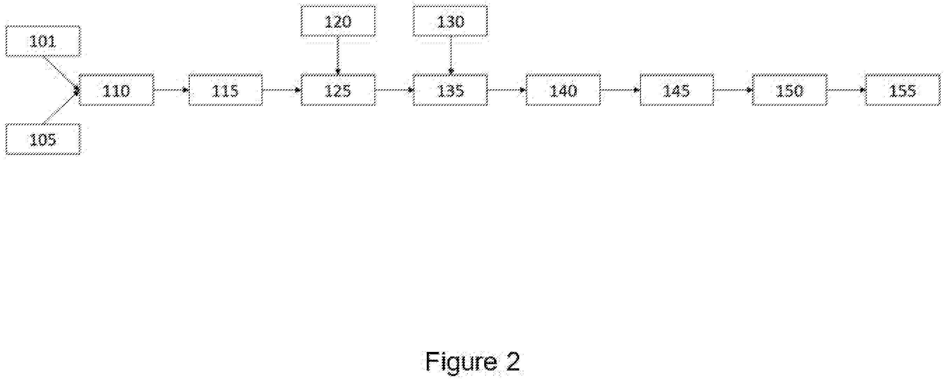

Figure 2 shows a flow-chart of the key steps of the process described herein.

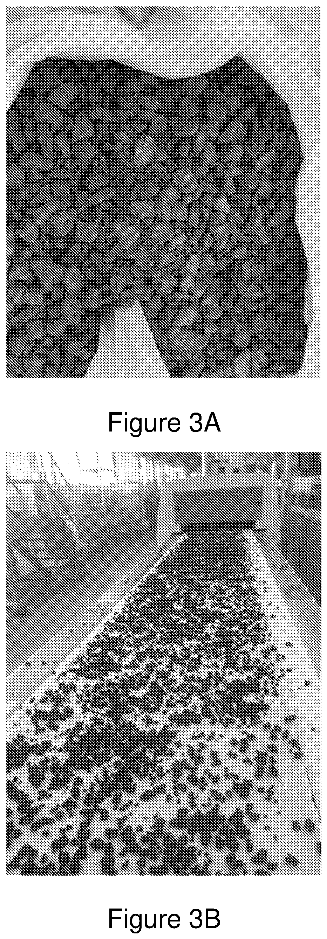

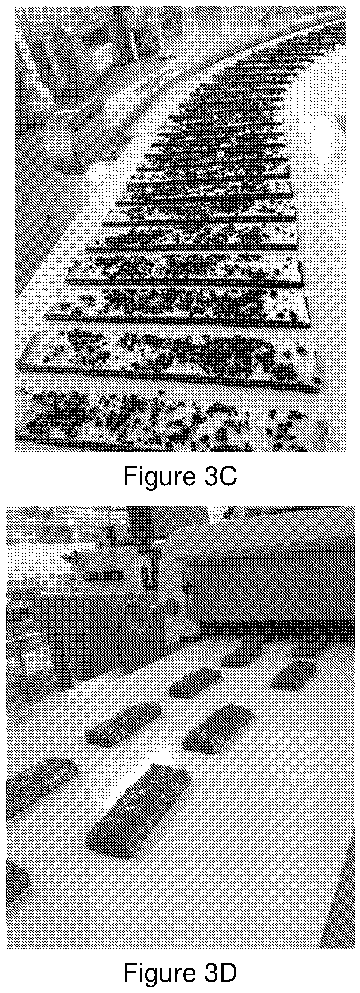

Figures 3A-D show stages and components in the manufacturing process. In particular, Figure 3A shows the texture additives in the form of crushed biscuits. Figure 3B shows an uncoated slab with the texture additives visible against the layer of crème. Figure 3C shows the slab cut into bar portions (approximately 3.2cm wide, 1.8cm tall and 10cm long). Figure 3D shows the coated nutrition bar products.

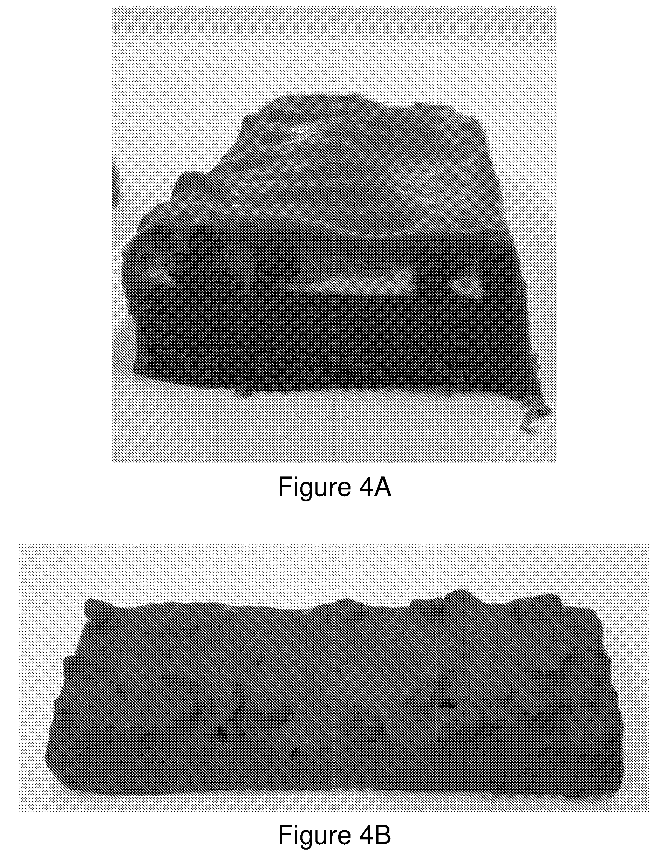

Figure 4A shows a cross-section through a nutrition bar product and Figure 4B shows a side view of the same.

The present invention relates to a nutrition bar 1. Suitable dimensions are 3-5cm in width and 10-20cm in length. The height of the nutrition bar 1 may vary, but is typically from 1 to 3cm. The nutrition bar 1 typically has a total product weight of about 60g, such as 55 to 65g.

The nutrition bar 1 comprises a base-cake 5 which has a high protein content. The base-cake 5 typically has an Aw of from 0.55 to 0.65. Since the base-cake is preferably made by rolling and cutting a sheet, it generally has a roughly cuboid form.

The base-cake 5 supports a layer of crème 10. This generally has a thickness of 1-5mm, such as 2-3mm. The crème 10 is an anhydrous filing composition, i.e. it is a fat-based filling.

Deposited across the layer of crème 10 there are provided texture additives 15 or so-called "onclusions". A preferred texture additive 15 is a biscuit crumb. The texture additives 15 typically have a particle size of 1 to 5mm. Since the texture additives 15 are applied onto the layer of crème 10, they do not directly contact the base-cake 5. This means that they are protected against the relatively high-moisture of the base-cake 5 which could cause a loss in the texture additives' 15 desirable texture.

A layer of coating 20 is applied to the final structure, enrobing the base-cake 5, the layer of crème 10 and the texture additives 15. It may be the case that some of the texture additives 15 are not entirely coated on all sides, but this is not critical to the final product, since the nutrition bar 1 is generally sealed in packaging and the high moisture base-cake 5 is generally entirely isolated from the texture additives 15 by the layer of crème 10 and the layer of coating 20. The layer of coating 20 typically has a thickness of 1 to 4mm.

Suitable recipes for each of the components are given below:

| | Percentage (wt%) |
|---|---|
| **Base-cake** | **60-70wt%** |
| Calcium caseinate | 20wt% (i.e. 33wt% of protein in base-cake) |
| Whey protein | 15wt% (i.e. 25wt% of protein in base-cake) |
| Hydrolysed beef collagen | 25wt% (i.e. 41wt% of protein in base-cake) |
| Cocoa powder | 5wt% |
| Glycerine | 20wt% |
| Fat | 15wt% |
| Water, sweeteners and flavours | The balance |

| **Crème layer** | **10-15wt%** |
|---|---|
| Fat | 30wt% |
| Maltitol | 60wt% |
| sweeteners and flavours | The balance |

| **Coating** | **20-25wt%** |
|---|---|
| No-added sugar chocolate | 100wt% |

| **Texture additives** | **2-5wt%** |
|---|---|
| Crushed dark sugar-free biscuits | 100wt% |

A method for the manufacture of the nutrition bar 1 will now be described further.

In a first step the base-cake 5 is prepared. A liquid premix 101 is prepared by mixing together the water, glycerine, fat and water-soluble sweetener and flavouring ingredients. Separately the dry ingredients 105 are weighed out, including the protein ingredients and the cocoa powder. The liquid premix 101 and the dry ingredients 105 are then mixed together in a high-speed mixer 110. Typical mixing times are in the region of 10 to 20 minutes for a 500-1000kg batch. The mixer can be run in a continuous mode, if desired.

After the mixture is fully mixed it is fed to forming drums 115. The forming drums 115 may be fitted with a collection hopper (not shown). The forming drums 115 serve to roll out a flat sheet of the base-cake mixture.

Separately a crème premix 120 is prepared from a melted fat ingredient and maltitol. This crème premix 120 is passed to a bucket sheeter 125 which applies a layer of the crème across the sheet of the base-cake mixture. The layer of crème 10 formed is generally 2-3mm thick.

Separately a suitably sized texture additive 15 is supplied in the form of dark sugar-free biscuit crumbs 130. These are applied to the layer of crème 10 using a sprinkler with automatic feeding conveyor 135. This forms a layer of the texture additives 15 on the layer of crème 10. The layer of the texture additives 15 may be incomplete, depending on how many texture additives 15 are desired.

The composite product of the base-cake 5, layer of crème 10 and the texture additives 15 is then cooled in a cooling step 140 before cutting the composite product with a guillotine 145 into individual bars. These individual bars are then enrobed 150 with the coating layer 20 and packed 155 in a flow-wrapper.

### Examples

The invention will now be described further in relation to the following non-limiting examples.

The inventors performed trials with different protein sources including different proportions of different proteins. Wheat and pea proteins, as well as skimmed milk powder, were all trialled. In addition, different ratios of calcium caseinate, whey protein and hydrolysed beef collagen were assessed, together and in combination with these further protein sources. The products differed in moisture content (related to Aw) for workable formulations and in the final product texture. The optimal formulations for ensuring a moisture content compatible with a long shelf-life and a desirable texture are described herein with particular reference to the Table above.

Optimal nutritional information for the final product is provided below:

### NUTRITION BAR SAMPLE

Ingredients: MILK chocolate with sweetener 20% (sweetener (maltitol), cocoa butter, whole MILK powder, cocoa mass, flavouring, emulsifier (SOYA lecithins)), hydrolysed collagen, humectant (glycerol), calcium caseinate (from MILK), whey protein (from MILK), sweeteners (maltitol, sucralose), palm oil, water, fat reduced cocoa powder (3%), WHEAT flour, starch, rapeseed oil, bulking agent (polydextrose), salt, emulsifier (SOYA lecithins), raising agents (ammonium carbonates, sodium carbonates), WHEAT starch, acidity regulator (sodium hydroxide), flavourings.

Unless otherwise stated, all percentages herein are by weight.

The term "comprising" is intended to be inclusive and mean that there may be additional elements other than the listed elements. The term "consisting of" is intended to mean that no other elements may be present other than those listed. The term "consisting essentially of" is intended to mean that no other elements may be present other than those listed unless the other elements do not materially affect the basic and novel characteristics of the invention.

## Claims

1. A base-cake for a nutrition bar, the base-cake having a water activity (aW) of 0.5 to 0.65, and comprising at least 50wt% of protein, the protein comprising, based on the total weight of protein in the base-cake:
25-35 % calcium caseinate;
20-30 % whey protein; and
38-45 % hydrolysed beef collagen.

2. A nutrition bar having at least 30wt% protein and less than 3.3wt% sugar, the nutrition bar comprising a coating layer at least substantially enclosing:
(a) a base-cake having a water activity (aW) of 0.5 to 0.65 and comprising at least 50wt% protein, the protein comprising:
calcium caseinate;
whey protein; and
hydrolysed beef collagen;
(b) a fat-based crème layer on the base-cake; and
(c) one or more texture additives on, or embedded in, the fat-based crème layer,
wherein the fat-based crème layer separates the one or more texture additives from the base-cake.

3. The nutrition bar according to claim 2, wherein the protein in the base-cake comprises, based on the total weight of protein in the base-cake:
25-35 % calcium caseinate;
20-30 % whey protein; and
38-45 % hydrolysed beef collagen.

4. The nutrition bar according to claim 3, wherein the protein in the base-cake comprises, based on the total weight of protein in the base-cake, up to 10wt% of a further protein source, optionally selected from wheat protein and pea protein, and combinations thereof.

5. The nutrition bar according to any of claims 2 to 4, wherein the base-cake comprises 55 to 65wt% protein.

6. The nutrition bar according to any of claims 2 to 5, wherein the base-cake comprises:
15 to 25wt% glycerine; and/or
10 to 20wt% fat; and/or
up to 10wt% cocoa powder

7. The nutrition bar according to any of claims 2 to 6, wherein the base-cake has a water activity of 0.55 to 0.62, preferably 0.58 to 0.62.

8. The nutrition bar according to any of claims 2 to 7, further comprising a hermetically sealed wrapping.

9. The nutrition bar according to any of claims 2 to 8, wherein the texture additives are selected from biscuit fragments, fruit chunks, crushed nuts, protein crisps, and chocolate chips.

10. The nutrition bar according to any of claims 2 to 9, wherein the texture additives have a particle size of 1 to 5mm, and, preferably, are substantially free of particles smaller than 1mm.

11. The nutrition bar according to any of claims 2 to 10, wherein the fat-based crème filing is anhydrous and comprises at least 25wt% fat.

12. The nutrition bar according to any of claims 2 to 11, wherein the coating is a sugar-free chocolate or compound coating and, preferably has a thickness of 2-3mm.

13. The nutrition bar according to any of claims 2 to 12, wherein relative to the weight of the final product:
the base-cake is present in an amount of 60-70wt%;
the fat-based creme layer is present in an amount of 10 to 20wt%;
the texture additives are present in an amount of 1 to 6wt%, and
the coating layer is present in an amount of from 15 to 25wt%.

14. A method of forming nutrition bars according to any of claims 2 to 13, the method comprising:
preparing a base-cake-premix comprising at least 50wt% protein, the protein comprising calcium caseinate, whey protein and hydrolysed beef collagen;
rolling the base-cake-premix to provide a base-cake-sheet, the base-cake sheet having a water activity (aW) of 0.5 to 0.65;
applying a fat-based creme to form a fat-based crème layer on the base-cake-sheet;
applying one or more texture additives to the fat-based crème layer to form a composite sheet product;
dividing the composite sheet product into a plurality of nutrition bar precursors;
enrobing the nutrition bar precursors with a coating layer to form nutrition bars.

## Patentansprüche

1. Basiskuchen für einen Nahrungsriegel, wobei der Basiskuchen eine Wasseraktivität (aW) von 0,5 bis 0,65 aufweist und mindestens 50 Gew.-% Protein umfasst, wobei das Protein, basierend auf dem Gesamtgewicht des Proteins in dem Basiskuchen, umfasst:
25 bis 35 % Calciumcaseinat;
20 bis 30 % Molkeprotein; und
38 bis 45 % hydrolysiertes Rinderkollagen.

2. Nahrungsriegel mit mindestens 30 Gew.-% Protein und weniger als 3,3 Gew.-% Zucker, wobei der Nahrungsriegel eine Überzugsschicht umfasst, die im Wesentlichen mindestens einschließt:
(a) einen Basiskuchen, der eine Wasseraktivität (aW) von 0,5 bis 0,65 aufweist und mindestens 50 Gew.-% Protein umfasst, wobei das Protein umfasst:
Calciumcaseinat;
Molkeprotein; und
hydrolysiertes Rinderkollagen;
(b) eine fettbasierte Cremeschicht auf dem Basiskuchen; und
(c) ein oder mehrere Texturzusätze auf der fettbasierten Cremeschicht oder in diese eingebettet,
wobei die fettbasierte Cremeschicht den einen oder die mehreren Texturzusätze von dem Basiskuchen trennt.

3. Nahrungsriegel nach Anspruch 2, wobei das Protein in dem Basiskuchen, basierend auf dem Gesamtgewicht des Proteins in dem Basiskuchen, umfasst:
25 bis 35 % Calciumcaseinat;
20 bis 30 % Molkeprotein; und
38 bis 45 % hydrolysiertes Rinderkollagen.

4. Nahrungsriegel nach Anspruch 3, wobei das Protein in dem Basiskuchen, basierend auf dem Gesamtgewicht des Proteins in dem Basiskuchen, bis zu 10 Gew.-% einer weiteren Proteinquelle umfasst, optional ausgewählt aus Weizenprotein und Erbsenprotein und Kombinationen davon.

5. Nahrungsriegel nach einem der Ansprüche 2 bis 4, wobei der Basiskuchen 55 bis 65 Gew.-% Protein umfasst.

6. Nahrungsriegel nach einem der Ansprüche 2 bis 5, wobei der Basiskuchen umfasst:
15 bis 25 Gew.-% Glycerin; und/oder
10 bis 20 Gew.-% Fett; und/oder
bis zu 10 Gew.-% Kakaopulver.

7. Nahrungsriegel nach einem der Ansprüche 2 bis 6, wobei der Basiskuchen eine Wasseraktivität von 0,55 bis 0,62, vorzugsweise 0,58 bis 0,62, aufweist.

8. Nahrungsriegel nach einem der Ansprüche 2 bis 7, ferner umfassend eine hermetisch versiegelte Verpackung.

9. Nahrungsriegel nach einem der Ansprüche 2 bis 8, wobei die Texturzusätze ausgewählt sind aus Keksfragmenten, Fruchtstücken, zerkleinerten Nüssen, Proteincrisps und Schokoladenchips.

10. Nahrungsriegel nach einem der Ansprüche 2 bis 9, wobei die Texturzusätze eine Partikelgröße von 1 bis 5 mm aufweisen und vorzugsweise im Wesentlichen frei von Partikeln kleiner als 1 mm sind.

11. Nahrungsriegel nach einem der Ansprüche 2 bis 10, wobei die fettbasierte Cremefüllung wasserfrei ist und mindestens 25 Gew.-% Fett umfasst.

12. Nahrungsriegel nach einem der Ansprüche 2 bis 11, wobei der Überzug ein zuckerfreier Schokoladen- oder Glasurüberzug ist und vorzugsweise eine Dicke von 2 bis 3 mm aufweist.

13. Nahrungsriegel nach einem der Ansprüche 2 bis 12, wobei bezogen auf das Gewicht des Endprodukts:
der Basiskuchen in einer Menge von 60 bis 70 Gew.-% vorliegt;
die fettbasierte Cremeschicht in einer Menge von 10 bis 20 Gew.-% vorliegt;
die Texturzusätze in einer Menge von 1 bis 6 Gew.-% vorliegen, und
die Überzugsschicht in einer Menge von 15 bis 25 Gew.-% vorliegt.

14. Verfahren zum Bilden von Nahrungsriegeln nach einem der Ansprüche 2 bis 13, wobei das Verfahren umfasst:
Herstellen einer Basiskuchen-Vormischung, umfassend mindestens 50 Gew.-% Protein, wobei das Protein Calciumcaseinat, Molkeprotein und hydrolysiertes Rinderkollagen umfasst;
Ausrollen der Basiskuchen-Vormischung, um eine Basiskuchenbahn bereitzustellen, wobei die Basiskuchenbahn eine Wasseraktivität (aW) von 0,5 bis 0,65 aufweist;
Aufbringen einer fettbasierten Creme, um eine fettbasierte Cremeschicht auf der Basiskuchenbahn zu bilden;
Aufbringen eines oder mehrerer Texturzusätze auf die fettbasierte Cremeschicht, um ein Verbundbahnprodukt zu bilden;
Unterteilen des Verbundbahnprodukts in eine Vielzahl von Nahrungsriegel-Vorläufern;
Überziehen der Nahrungsriegel-Vorläufer mit einer Überzugsschicht, um Nahrungsriegel zu bilden.

## Revendications

1. Gâteau de base pour une barre nutritionnelle, le gâteau de base ayant une activité de l'eau (aW) de 0,5 à 0,65 et comprenant au moins 50 % en poids de protéines, les protéines comprenant, sur la base du poids total de protéines dans le gâteau de base :
25 à 35 % de caséinate de calcium ;
20 à 30 % de protéine de lactosérum ; et
38 à 45 % de collagène de bœuf hydrolysé.

2. Barre nutritionnelle contenant au moins 30 % en poids de protéines et moins de 3,3 % en poids de sucre, la barre nutritionnelle comprenant une couche d'enrobage enfermant au moins essentiellement :
(a) un gâteau de base ayant une activité de l'eau (aW) de 0,5 à 0,65 et comprenant au moins 50 % en poids de protéines, les protéines comprenant :
du caséinate de calcium ;
de la protéine de lactosérum ; et
du collagène de bœuf hydrolysé ;
(b) une couche de crème à base de matières grasses sur le gâteau de base ; et
(c) un ou plusieurs additifs de texture sur la couche de crème à base de matières grasses, ou incorporés dans celle-ci,
dans laquelle la couche de crème à base de matières grasses sépare le ou les additifs de texture du gâteau de base.

3. Barre nutritionnelle selon la revendication 2, dans laquelle les protéines dans le gâteau de base comprennent, sur la base du poids total de protéines dans le gâteau de base :
25 à 35 % de caséinate de calcium ;
20 à 30 % de protéine de lactosérum ; et
38 à 45 % de collagène de bœuf hydrolysé.

4. Barre nutritionnelle selon la revendication 3, dans laquelle les protéines dans le gâteau de base comprennent, sur la base du poids total de protéines dans le gâteau de base, jusqu'à 10 % en poids d'une source de protéines supplémentaire, facultativement choisie parmi protéines de blé et protéines de pois, et des combinaisons de celles-ci.

5. Barre nutritionnelle selon l'une quelconque des revendications 2 à 4, dans laquelle le gâteau de base comprend de 55 à 65 % en poids de protéines.

6. Barre nutritionnelle selon l'une quelconque des revendications 2 à 5, dans laquelle le gâteau de base comprend :
15 à 25 % en poids de glycérine ; et/ou
10 à 20 % en poids de matières grasses ; et/ou
jusqu'à 10 % en poids de poudre de cacao

7. Barre nutritionnelle selon l'une quelconque des revendications 2 à 6, dans laquelle le gâteau de base a une activité de l'eau de 0,55 à 0,62, de préférence de 0,58 à 0,62.

8. Barre nutritionnelle selon l'une quelconque des revendications 2 à 7, comprenant en outre un emballage hermétiquement fermé.

9. Barre nutritionnelle selon l'une quelconque des revendications 2 à 8, dans laquelle les additifs de texture sont choisis parmi des fragments de biscuit, morceaux de fruits, fruits à coque concassés, produits croustillants protéinés, et pépites de chocolat.

10. Barre nutritionnelle selon l'une quelconque des revendications 2 à 9, dans laquelle les additifs de texture ont une taille de particules de 1 à 5 mm et, de préférence, sont sensiblement exempts de particules inférieures à 1 mm.

11. Barre nutritionnelle selon l'une quelconque des revendications 2 à 10, dans laquelle le remplissage de crème à base de matières grasses est anhydre et comprend au moins 25 % en poids de matières grasses.

12. Barre nutritionnelle selon l'une quelconque des revendications 2 à 11, dans laquelle l'enrobage est un enrobage de chocolat sans sucre ou composé et, de préférence, a une épaisseur de 2 à 3 mm.

13. Barre nutritionnelle selon l'une quelconque des revendications 2 à 12, dans laquelle, par rapport au poids du produit final :
le gâteau de base est présent en une quantité de 60 à 70 % en poids ;
la couche de crème à base de matières grasses est présente en une quantité de 10 à 20 % en poids ;
les additifs de texture sont présents en une quantité de 1 à 6 % en poids, et
la couche d'enrobage est présente en une quantité allant de 15 à 25 % en poids.

14. Procédé de formation de barres nutritionnelles selon l'une quelconque des revendications 2 à 13, le procédé comprenant :
la préparation d'un prémélange de gâteau de base comprenant au moins 50 % en poids de protéines, les protéines comprenant du caséinate de calcium, des protéines de lactosérum et du collagène de bœuf hydrolysé ;
le laminage du prémélange de gâteau de base pour obtenir une feuille de gâteau de base, la feuille de gâteau de base ayant une activité de l'eau (aW) de 0,5 à 0,65 ;
l'application d'une crème à base de matières grasses pour former une couche de crème à base de matières grasses sur la feuille de gâteau de base ;
l'application d'un ou plusieurs additifs de texture sur la couche de crème à base de matières grasses pour former un produit en feuille composite ;
la division du produit en feuille composite en une pluralité de précurseurs de barres nutritionnelles ;
l'enrobage des précurseurs de barres nutritionnelles d'une couche d'enrobage pour former des barres nutritionnelles.
